# EUROPÄISCHE PATENTSCHRIFT

(11) **EP 1 021 321 B1**
(45) Veröffentlichungstag und Bekanntmachung des Hinweises auf die Patenterteilung: **12.11.2003**
(21) Anmeldenummer: 99923467.7
(22) Anmeldetag: 27.04.1999
(51) Int. Cl.: B60S 1/04

(54) **SCHEIBENWISCHERANLAGE FÜR FAHRZEUGE**
WINDSCREEN WIPER SYSTEM FOR VEHICLES
SYSTEME D'ESSUIE-GLACE POUR VEHICULES

(30) Priorität: 24.07.1998 DE 19833404
(43) Veröffentlichungstag der Anmeldung: 26.07.2000
(73) Patentinhaber: Valeo Wischersysteme GmbH, 74321 Bietigheim-Bissingen (DE)
(72) Erfinder: EGNER-WALTER, Bruno, D-74076 Heilbronn (DE)
(74) Vertreter: Jahn, Wolf-Diethart
(86) Internationale Anmeldenummer: EP9902822
(87) Internationale Veröffentlichungsnummer: WO00006429

(56) Entgegenhaltungen:
- DE-A- 4 036 367
- FR-A- 1 368 673
- GB-A- 2 228 188

## Beschreibung

Die Erfindung betrifft eine Scheibenwischeranlage für Fahrzeuge, insbesondere für Kraftfahrzeuge, mit den Merkmalen des Oberbegriffs von Anspruch 1.

Eine Scheibenwischeranlage dieser Art ist aus DE 4036367 A1 bekannt. Sie weist einen längliche, eine Scheibenwischerantriebsvorrichtung aufnehmenden Tragkonstruktion auf, die im Bereich ihrer beiden Enden an jeweils einem Befestigungspunkt ein Befestigungsglied trägt, mit deren Hilfe der Tragkonstruktion an einem Teil der Fahrzeugkarosserie befestigbar ist. Diese Befestigungsglieder sind durch am Tragkörper zueinander parallel und axial gesichert verdrehbar angeordnete und sich in gleicher Richtung erstreckende Schrauben gebildet, die karosserieseitig in Gewindebohrungen einzuschrauben sind. Scheibenwischeranlagen dieser Art weisen in der Regel wenigstens einen weiteren Befestigungspunkt auf, an dem als weiteres Befestigungsglied ebenfalls eine Schraube oder ein Steckzapfen vorgesehen ist, der formschlüssig in eine karosserieseitig vorgesehene Aufnahmeöffnung einsteckbar ist.

Diese Art der Befestigung erfordert eine entsprechend teure, spezielle Lagerung und Montage der Schrauben an den Befestigungspunkten der Tragkonstruktion sowie ein Anschrauben der Befestigungsschrauben am Fahrzeugkörper, was zeitraubend und damit gleichfalls kostenintensiv ist.

Der Erfindung liegt die Aufgabe zugrunde, eine dem Oberbegriff des Anspruches 1 entsprechende Scheibenwischervorrichtung sowohl in fertigungstechnischer als auch montagetechnischer Hinsicht zu vereinfachen.

Diese Aufgabe wird erfindungsgemäß durch die kennzeichnenden Merkmale des Anspruches 1 gelöst.

Diese Scheibenwischeranlage ist wegen ihrer erfindungsgemäßen Ausbildung mit von der Tragkonstruktion abragenden, steckbaren Befestigungsgliedern an allen Befestigungspunkten der Tragkonstruktion schnell und mit einer einfachen Handhabung durch eine verschraubungsfreie Steckverbindung an einem Fahrzeugkörper zu montieren. Durch die Verwendung steckbarer Befestigungsglieder an allen Befestigungspunkten entfällt außerdem eine verliersichere Vormontage von Befestigungsschrauben an der Tragkonstruktion gemäß dem einleitend beschriebenen Stand der Technik. Somit ergibt sich auch eine Vereinfachung in fertigungstechnischer Hinsicht.

Vorteilhafte Ausgestaltungen der Erfindung ergeben sich aus den Unteransprüchen.

Durch eine Ausgestaltung gemäß Anspruch 2, wobei die zweite Anzahl Befestigungsglieder in eine zweite Richtung von der Tragkonstruktion abragt, die in einem Winkel von 45° bis 135°, vorzugsweise etwa 90°, zu der ersten Richtung der ersten Anzahl Befestigungsglieder verläuft, ist für die erste Anzahl Befestigungsglieder durch diese Anordnung eine Axialsicherung gegen Herauslösen derselben aus ihren Einstecköffnungen am Fahrzeugkörper gebildet.

Eine Ausgestaltung der Erfindung gemäß Anspruch 3 gewährleistet eine stabile Befestigung der Scheibenwischeranlage an dem Fahrzeugkörper in bezug auf die Achsrichtung der wenigstens einen Wischerwelle, so daß eine ordnungsgemäße Anpreßkraft des Wischblattes gegen die Fahrzeugscheibe sichergestellt ist.

Dabei sorgt eine Ausgestaltung gemäß Anspruch 4 für eine besonders einfache Handhabung bei der Montage bzw. Demontage der Scheibenwischeranlage am Fahrzeug bzw. vom Fahrzeug, wobei außerdem eine optimale Axialsicherung für die erste Anzahl Befestigungsglieder in Ihren Aufnahmeöffnungen am Fahrzeugkörper sichergestellt wird. Bei der Montage wird zunächst die Scheibenwischeranlage mit der ersten Anzahl Befestigungsglieder in einer in bezug auf die Mittelachsen der Aufnahmeöffnungen abgewinkelten Lage in die zugeordneten Aufnahmeöffnungen am Fahrzeugkörper eingeschoben. Bei Erreichen einer entsprechenden Einschubtiefe, die gemäß Anspruch 15 vorteilhaft durch einen entsprechenden Anschlag begrenzt bzw. definiert sein kann, wird nun die Scheibenwischeranlage lediglich quer zu der ersten Einschubrichtung verschwenkt, wodurch die zweite Anzahl Befestigungsglieder mit den zugeordneten Aufnahmeöffnungen in Eingriff gebracht werden. Auch bei der zweiten Anzahl Befestigungsglieder würden Anschläge gemäß Anspruch 15 für eine weitere Montagevereinfachung sorgen. Die Demontage würde in gleicher einfacher Weise mit umgekehrtem Bewegungsablauf erfolgen.

Eine Ausgestaltung gemäß Anspruch 5 sieht vor, daß die Befestigungsglieder Steckzapfen mit vorzugsweise zylindrischer Form sind. Dieses ist eine optimal einfache konstruktive und materialsparende Gestaltung der Befestigungsglieder, die trotzdem eine sichere und stabile Befestigung der Scheibenwischeranlage gewährleistet. Die Steckzapfen können an der Tragkonstruktion in einfacher Weise durch Anschweißen oder durch eine Preß-Paßverbindung starr befestigt sein. Zu deren Aufnahme am Fahrzeugkörper genügen dabei zylindrische Bohrungen, wobei lediglich zwei hiervon zwecks rüttelsicherer Halterung der Befestigungsvorrichtung entsprechend eng toleriert vorzusehen sind.

Eine Ausgestaltung der Erfindung gemäß Anspruch 6 mit einstückig mit der Tragkonstruktion bzw. Teilen der Tragkonstruktion ausgebildeten Befestigungsgliedern ermöglicht eine einfache und kostengünstige Fertigung.

Eine Anordnung der Befestigungsglieder an der Tragkonstruktion entsprechend einer Ausgestaltung nach Anspruch 7 gewährleistet montagefreundliche und eine einfache fertigungstechnische Anbringung der Befestigungsglieder an der Tragkonstruktion oder einem Teil der Tragkonstruktion. Außerdem ist diese Anordnung der Befestigungsglieder an den gegenüberliegenden Außenseiten bzw. gegenüberliegenden Längsseiten der Tragkonstuktion unter dem Gesichtspunkt der beim Wischerbetrieb wirkenden Kräfte vorteilhaft für eine sichere Befestigung, insbesondere weil unter Berücksichtigung der geometrischen Verhältnisse der Scheibenwischeranlage somit ein optimal großer Abstand zwischen der ersten und der zweiten Anzahl Befestigungsglieder gegeben ist.

Eine Ausgestaltung gemäß Anspruch 8 wird für vor allem die Fälle empfohlen, in denen die Anzahl der ersten Befestigungsglieder wegen einer großen Längserstreckung der Scheibenwischeranlage größer als zwei ist. Dieses kann vor allem bei Scheibenwischeranlagen mit mehr als zwei Wischerwellen, die beispielsweise für die Verwendung in einem Bus oder LKW vorgesehen sind, vorkommen. Die Anordnung dieser Befestigungsglieder auf einer geraden oder annähernd geraden Verbindungslinie ermöglicht ein einfacheres Einführen in die zugeordneten Aufnahmeöffnungen und stellt die erforderliche Verschwenkbarkeit der Scheibenwischeranlage bei deren Montage oder Demontage zum Einstecken bzw. Entfernen der zweiten Anzahl Befestigungsglieder in die bzw. aus den Aufnahmeöffnungen sicher.

Eine Ausgestaltung gemäß Anspruch 9 ist von Vorteil im Hinblick auf eine einfache und kostengünstige Fertigung. Außerdem ist damit gesichert, daß die Scheibenwischeranlage bzw. deren Tragkonstruktion an einem Ort unterschiedlichster Krafteinwirkungen mit dem Fahrzeugkörper verbunden ist, was von Vorteil für eine dauerhaft sichere Befestigung und exakte Wischerbewegungen auf der Fahrzeugscheibe ist. Diese Vorteile treffen in übertragener Weise auch auf eine Ausgestaltung gemäß Anspruch 10 zu, wobei sich hiermit sowohl ein relativ großer Seitenabstand zur Verbindungslinie der ersten Befestigungsglieder als auch ein günstiger Steckeingriff dieses an dem Antriebsaggregat vorgesehenen Befestigungsgliedes in die ihm zugeordnete Aufnahmeöffnung erzielen läßt.

Bevorzugt wird eine Ausgestaltung der Erfindung gemäß Anspruch 11, weil diese mit vorteilhaft geringem fertigungsund montagetechnichem Aufwand eine betriebssichere Befestigung der Scheibenwischeralage an dem Fahrzeug ermöglicht, wobei durch eine Ausgestaltung der erfindungsgemäßen Konstruktion gemäß Anspruch 12 unter dem Gesichtspunkt einer optimalen Kräfteverteilung eine günstige Abstützbasis der Scheibenwischeranlage an dem Fahrzeugkörper erzielbar ist. Im Zusammenhang mit einer der Ausgestaltungen gemäß Anspruch 11 oder 12 löst aus derzeitiger Sicht eine Ausgestaltung der Erfindung für eine Scheibenwischeralage der im Oberbegriff des Anspruchs 13 angeführten Art die eingangs gestellte Aufgabe am besten.

In diesem Zusammenhang sei darauf verwiesen, daß aus der DE 44 136 35 A1 bereits eineScheibenwischeranlage bekannt ist, die über drei, auf den Ecken eines Dreiecks liegenden Befestigungspunkten an Karosserieteilen abgestützt ist. Zwei der Befestigungspunkte sind an der Scheibenwischanlage seitlich angeordnet und mit entsprechenden Befestigungsteilen mit einer Karosserietragwand fest zu verbinden. Der dritte Befestigungspunkt ist gemäß einer bevorzugten Ausführungsform durch ein konstruktiv aufwendiges, anbaubares Halteelement definiert, das eine Gummitülle trägt, in die ein von der Wischeranlage abragendes Halteteil einsteckbar ist. Auch bei dieser Konstruktion ist somit die Befestigungsvorrichtung nicht durch eine verschraubungsfreie Steckverbindung montierbar.

Eine vorteilhafte Ausgestaltung der Erfindung gemäß Anspruch 14 sorgt aufgrund der Verdickung am freien Ende wenigstens eines von der zweiten Anzahl Befestigungsgliedern für eine Axialsicherung dieses Befestigungsgliedes bzw. der zweiten Anzahl Befestigungsglieder.

Ein fertigungstechnisch bedingter Versatz von Aufnahmeöffnungen am Fahrzeugkörper oder ggf. auch der Befestigungsglieder vermag sich durch eine Maßnahme gemäß Anspruch 16 nicht nachteilig auszuwirken.

Schließlich ist es günstig, zwecks schwingungsmäßiger Abkopplung von untereinander in Eingriff zu bringenden Steckkomponenten die Aufnahmeöffnungen am Fahrzeugkörper mit einem Dämpfungselement gemäß Anspruch 17 auszustatten. Wegen der Elastizität einer solchen Gummitülle wird trotz ansonsten enger Passung problemlos der Einschub bzw. der Auszug der Ersten Anzahl Befestigungsglieder in einem Winkel in bezug auf die Mittelachsen der Aufnahmeöffnungen ermöglicht. Außerdem kann eine solche Gummitülle mit einer Verdickung am betreffenden Befestigungsglied in der Art einer Rastung als Axilsicherung zusammenwirken.

Ein bevorzugtes Ausführungsbeispiel der Erfindung wird nachfolgend anhand der Zeichnung beschrieben. In der Zeichnung zeigen:
- Fig. 1:: eine schaubildliche Darstellung einer Scheibenwischeranlage mit einer Tragkonstruktion und einer Scheibenwischerantriebsvorrichtung,
- Fig. 1a:: eine spezielle Ausgestaltung eines an der Tragkonstruktion vorgesehenen Befestigungsgliedes,
- Fig. 2:: eine verkürzt dargestellte Ansicht von drei am Fahrzeugkörper vorgesehenen Befestigungspunkten zur steckbaren Montage der Scheibenwischeranlage, in Richtung des Pfeiles A der Fig. 3 gesehen;
- Fig. 3:: einen entlang der Linie III-III der Fig. 2 durch einen am Fahrzeugkörper vorgesehenen Befestigungspunkt verlaufenden Schnitt, wobei die Steckverbindung eines an diesem Befestigungspunkt gehaltenen Befestigungsgliedes der Scheibenwischanlage strichpunktiert eingezeichnet ist.

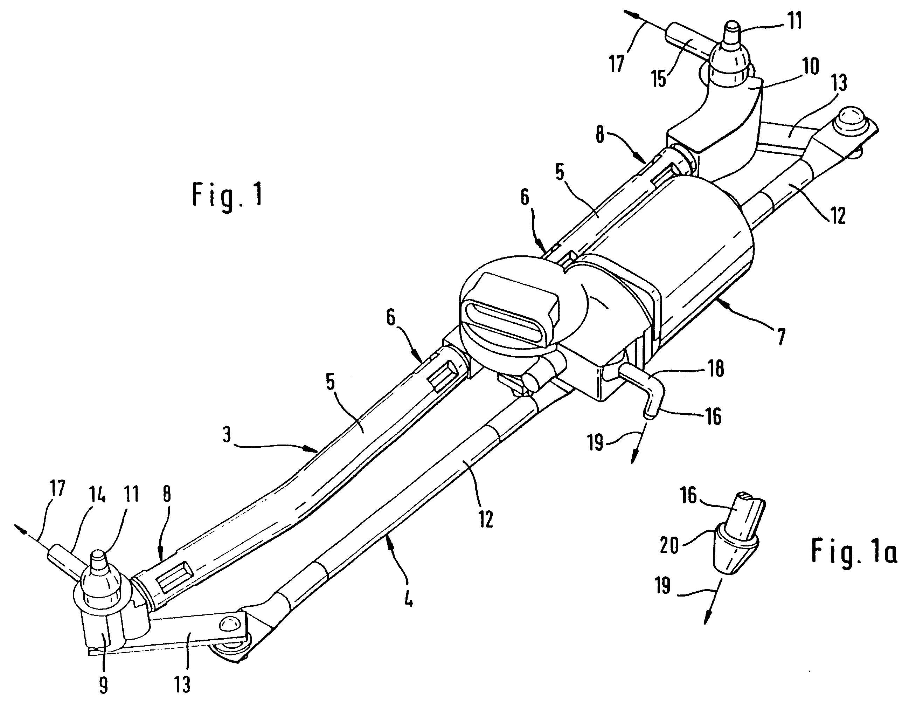

Die in Fig. 1 gezeigte Scheibenwischeranlage umfaßt im wesentlichen eine zur Befestigung unterhalb der Windschutzscheibe 1 an einem zu einem Kraftfahrzeug gehörenden Fahrzeugkörper 2 bestimmte Tragkonstruktion 3 und eine Scheibenwischerantriebsvorrichtung 4, die mit der Tragkonstruktion verbunden ist. Die im wesentlichen längliche Tragkonstruktion 3 umfaßt zwei Tragrohre 5, die die zumindest annähernd in der gleichen Längsausrichtung angeordnet und jeweils mit ihrem inneren Ende in Form einer Krimp-Verbindung 6 an dem Getriebegehäuse oder dem Gehäusedeckel eines Antriebsaggregates 7 befestigt sind. Das Antriebsaggregat 7 ist somit aufgrund dieser Tragfunktion auch als ein Teil der Tragkonstruktion 3 zu verstehen. An den äußeren Enden der Tragrohre 5 ist über eine weitere Krimpverbindung 8 jeweils ein Lager 9, 10 befestigt, in dem eine Wischerwelle 11 drehbar gelagert ist. Die beiden Wischerwellen 11 gehören bereits zu der Scheibenwischerantriebsvorrichtung 4, zu der außerdem das Antriebsaggregat 7 gehört. In Fig. 1 nicht sichtbar ist eine drehfest auf der Abtriebswelle des Antriebsaggregates 7 sitzende Antriebskurbel, die gelenkig mit den beiden Stangen 12 verbunden ist. Die Antriebsstangen 12 wiederum sind jeweils gelenkig mit einer drehfest an der Wischerwelle 11 befestigten Schwinge 13 verbunden. Diese für den gleichsinnigen Antrieb zweier Scheibenwischer ausgelegte Scheibenwischerantriebsvorrichtung 4 wird somit von dem Antriebsaggregat 7, der Antriebskurbel, den beiden Stangen 12, den beiden Schwingen 13 und den beiden Wischerwellen 11 gebildet.

Erfindungswesentlich ist nunmehr, daß die aus den beiden vormontierten Baugruppen Tragkonstruktion 3 und Scheibenwischerantriebsvorrichtung 4 gebildete Scheibenwischeranlage mittels einer verschraubungsfreien Steckverbindung unterhalb der Windschutzscheibe 1 einer Fahrzeugkarosserie an dem Fahrzeugkörper 2 befestigbar ist. Zu diesem Zweck sind an der Tragkonstruktion 3 die als zylindrische Steckzapfen 14, 15, 16 ausgebildeten drei Befestigungsglieder 14, 15, 16 vorgesehen. Die beiden Befestigungsglieder 14 und 15 bzw. Steckzapfen 14 und 15 bilden eine erste Anzahl Befestigungsglieder 14, 15 und sind jeweils einstückig an dem als Gußteil gefertigten Lager 9 bzw. 10 ausgebildet. Dabei sind die beiden Steckzapfen 14, 15 parallel zueinander angeordnet und liegen jeweils in einer zu der Windschutzscheibe 1 parallelen Ebene. Sie ragen somit von den Lagern 9, 10 in eine erste gleiche Richtung 17 ab und sind dabei an der einen Längsseite der Tragkonstruktion angeordnet. Der dritte Steckzapfen 16, der hier die zweite Anzahl Befestigungsglieder 16 bildet, ist über ein Verbindungsstück 18 einstückig mit einem Teil eines zu dem Antriebsaggregat 7 gehörenden Gehäuses verbunden. Er ist an der gegenüberliegenden Längsseite der Tragkonstruktion 3 angeordnet und ragt dort in eine zweite Richtung 19 von der Tragkonstruktion ab. Es wird darauf hingewiesen, daß die zweite Richtung 19 etwa rechtwinklig zu der ersten Richtung 17 verläuft,wobei der Steckzapfen 16 bei am Fahrzeug montierter Scheibenwischeranlage in bezug auf die Fahrzeugscheibe 1 etwa im rechten Winkel und dabei von dieser hinweg von der Tragkonstruktion 3 abragt. Der Winkel zwischen der ersten Richtung 17 und der zweiten Richtung 19 könnte auch einem Bereich von etwa 45° bis etwa 135° liegen.

Die in einem solchen Fall wirkenden Komponenten der Haltekräfte sind immer noch ausreichend für eine funktionssichere Halterung der Scheibenwischeranlage am Fahrzeugkörper 3 und die Montage oder Demontage der Scheibenwischeranlage würde durch eine solche Ausbildung nicht erschwert oder behindert werden. In diesem Zusammenhang kann auch die in Figur 1a gezeigte Ausbildung des dritten Steckzapfens 16 mit einer Verdickung 20 am freien Enden für eine Axialsicherung des Steckzapfens 16 von Vorteil sein. Da die Steckzapfen 14, 15, 16 auf den Eckpunkten eines Dreiecks liegen, ist bilden eine stabile Abstützbasis für die Scheibenwischeranlage gebildet.

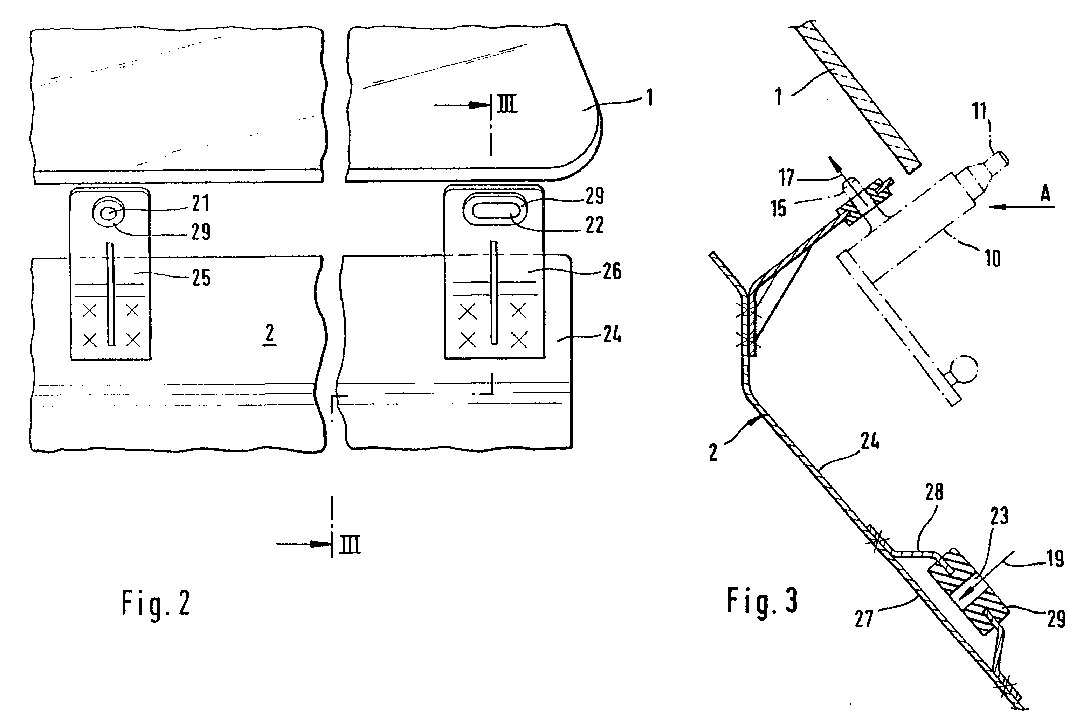

In den Figuren 2 und 3 sind für die Befestigung der in Fig. 1 dargestellten Scheibenwischeranlage an drei örtlich angepaßten Befestigungspunkten des Fahrzeukörpers 2 die Aufnahmeöffnungen 21, 22 und 23 vorgesehen, die für die Aufnahme der Befetigungsglieder 14, 15, 16 bzw. der Steckzapfen 14, 15, 16 ausgebildet sind. Hiervon sind beispielsweise die Aufnahmeöffnungen 21 und 22 in jeweils einer von in seitlichem Abstand voneinander auf die zu dem Fahrzeugkörper 2 gehörende Tragwand 24 aufgepunkteten Aufnahmelasche 25 bzw. 26 vorgesehen, während die Aufnahmeöffnung 23, wie Fig. 3 zeigt, unterhalb und etwa in der Mitte zwischen den Aufnahmelaschen 25, 26 der Tragwand 24 an einem beispielsweise ungefähr parallel zur Winschutzscheibe 1 und, in Fahrtrichtung des Kraftfahrzeuges gesehen, schräg nach vorne unten geneigten Wandteil 27 in einem Halter 29 vorgesehen ist.

Um fertigungsbedingte Toleranzen bei der Positionierung der oberen Aufnahmeöffnungen 21, 22 auszugleichen, ist eine derselben, beispielsweise die rechts liegende Aufnahmeöffnung 22, als Langloch ausgebildet.

Zur schwingungsmäßigen Abkopplung der vormontierten Scheibenwischeranlage vom Fahrzeugkörper 2 sind die Aufnahmeöffnungen 21, 22, 23 in Tüllen 29 aus Gummi oder anderem, geeignetem, elastischem Material vorgesehen, die ihrerseits in entsprechende Durchbrüche der Teile 25, 26, 28 eingeknüpft sind.

Wie Fig. 1 zeigt, ist der Steckzapfen 16 beispielsweise durch das freie Endstück eines rechtwinklig abgebogenen Zylinderstiftes gebildet. Auch jede andere Ausbildung und Anordnung ist denkbar; insbesondere könnte der Steckzapfen 16 auch nach oben gerichtet sein. Beide möglichen Anordnungen des Steckzapfens 16 stellen sicher, dass die Scheibenwischeranlage, sobald deren Steckzapfen 14, 15, 16 mit den zugeordneten Aufnahmeöffnungen 21, 22, 23 in Eingriff gebracht sind, der Steckzapfen 16 einen Anschlag bildet, durch den eine Axialverlagerung und damit ein Herauslösen der beiden anderen Steckzapfen 14, 15 aus ihren Aufnahmeöffnungen 21, 22 zuverlässig verhindert wird.

Wie Fig. 1a zeigt, kann am freien Ende des Steckzapfens 16 eine, vorzugsweise konische, Verdickung 20, um dasselbe in der Tülle 29 durch Verrasten festlegen zu können.

Im Hinblick auf die Fig. 1 bis 3 ist noch zu bemerken, daß die Scheibenwischeranlage und die Befestigungspunkte am Fahrzeugkörper 2 auch für den Fall ausgebildet sein können, daß die Scheibenwischeralage um 180° um ihre quer verlaufende Mittelachse verdreht am Fahrzeugkörper 2 montierbar ist. In diesem Fall würde der Steckzapfen 16 der ersten Anzahl Befestigungsglieder zugeordnet sein und in die erste Richtung 17 abragen, während die anderen beiden Steckzapfen der zweiten Anzahl Befestigungsglieder zugeordnet wären und in die zweite Richtung 19 abragen. Dementsprechend müßten die Aufnahmeöffnungen 21, 22, 23 ausgebildet und zugeordnet sein.

Ebenso können entsprechend dem Hauptanspruch und den möglichen Anspruchskombinationen im Rahmen der Erfindung weitere Ausgestaltungen vorgenommen werden. Beispielsweise können an der Tragkonstruktion 3 bzw. an deren gegenüberliegenden Außenseiten auch mehr Befestigungsglieder als im vorliegenden Ausführungsbeispiel vorgesehen werden.

Weiterhin kann die Scheibenwischeranlage auch nur mit einem Lager für eine Wischerwelle oder mit mehr als zwei Lagern für jeweils eine Wischerwelle ausgestattet sein. Die Tragkonstruktion könnte auch ein einziges Bauteil aus Metall oder Kunststoffmaterial und dabei ein Gußteil oder Blechteil sein.

### Bezugszeichen

- 1: Fahrzeugscheibe/ Windschutzscheibe
- 2: Fahrzeugkörper
- 3: Tragkonstruktion
- 4: Scheibenwischerantriebsvorrichtung
- 5: Tragrohr
- 6: Krimp-Verbindung
- 7: Antriebsaggregat
- 8: Krimp-Verbindung
- 9: Lager
- 10: Lager
- 11: Wischerwelle
- 12: Stange
- 13: Schwinge
- 14: Befestigungsglied/ Steckzapfen
- 15: Befestigungsglied/ Steckzapfen
- 16: Befestigungsglied/ Steckzapfen
- 17: Richtung
- 18: Verbindungsstück
- 19: Richtung
- 20: Verdickung
- 21: Aufnahmeöffnung
- 22: Aufnahmeöffnung
- 23: Aufnahmeöffnung
- 24: Tragwand
- 25: Aufnahmelasche
- 26: Aufnahmelasche
- 27: Wandteil
- 28: Halter
- 29: Tülle
- A: Pfeil

## Patentansprüche

1. Scheibenwischeranlage für Fahrzeuge, insbesondere für Kraftfahrzeuge, mit einer Tragkonstruktion (3), zu der wenigstens ein Lager (9, 10) für eine antreibbare Wischerwelle (11) gehört, und mit einer Scheibenwischerantriebsvorrichtung (4), zu der ein Antriebsaggregat (7)gehört, das an der Tragkonstruktion (3) befestigt oder in die Tragkonstruktion (3) einbezogen ist, und zu der ferner die wenigstens eine Wischerwelle (11) und ein das Antriebsaggregat (7) und die wenigstens eine Wischerwelle (11) verbindendes Getriebe gehören, wobei die Tragkonstruktion (3) zur sicheren Befestigung an dem Fahrzeugkörper (2) mindestens drei voneinander beabstandete Befestigungspunkte ( ) aufweist von denen zwei auf einer Verbindungslinie liegen und der dritte von der Verbindungslinie beabstandet ist, die zum Zusammenwirken mit einer entsprechenden Anzahl von Befestigungspunkten am Fahrzeugkörper (2) ausgebildet sind, **dadurch gekennzeichnet, daß** an allen Befestigungspunkten der Tragkonstruktion (3) von der Tragkonstruktion (3) abragende Befestigungsglieder (14, 15, 16) vorgesehen sind, die zur Befestigung der Scheibenwischeranlage an dem Fahrzeugkörper (2) allein durch Einstecken in entsprechend ausgebildete Aufnahmeöffnungen (21, 22, 23) an den betreffenden Befestigungspunkten des Fahrzeugkörpers (2) ausgebildet sind, so daß im Ergebnis eine verschraubungsfreie Befestigung der Scheibenwischeranlage an dem Fahrzeugkörper (2) realisierbar ist.

2. Scheibenwischeranlage nach Anspruch 1, **dadurch gekennzeichnet, daß** eine erste Anzahl an der Tragkonstruktion (3) vorgesehener Befestigungsglieder (14, 15) in eine erste gleiche Richtung (17) von der Tragkonstruktion (3) abragt, während die übrige, zweite Anzahl Befestigungsglieder (16) in einem Abstand von der Verbindungslinie der zu der ersten Anzahl gehörenden Befestigungsglieder (15, 16) an der Tragkonstruktion (3) vorgesehen ist und in eine zweite gleiche Richtung (19) von der Tragkonstruktion (3) abragt, die in einem Winkel zwischen 45° und 135° zu der ersten Richtung (17) verläuft, vorzugsweise in einem Winkel von etwa 90°.

3. Scheibenwischeranlage nach Anspruch 2, **dadurch gekennzeichnet, daß** die erste Anzahl an der Tragkonstruktion (3) vorgesehener Befestigungsglieder (14, 15) im wesentlichen quer in bezug auf die Mittellängsachse des wenigstens einen Lagers (9, 10) für eine Wischerwelle (11) von der Tragkonstruktion (3) abragt und daß sich diese Befestigungsglieder (14, 15) in einer im wesentlichen zu der Fahrzeugscheibe (1) parallelen Ebene erstrecken.

4. Scheibenwischeranlage nach einem der vorhergehenden Ansprüche 2 bis 3, **dadurch gekennzeichnet, daß** die zweite Anzahl Befestigungsglieder (16) in einer im wesentlichen rechtwinklig zu der Fahrzeugscheibe (1) verlaufenden Ebene liegen und, bezogen auf die zu wischende Fahrzeugscheibe (1), sich von dieser hinweg erstrecken.

5. Scheibenwischeranlage nach einem der vorhergehenden Ansprüche, **dadurch gekennzeichnet, daß** die an der Tragkonstruktion (3) vorgesehenen Befestigungsglieder (14, 15, 16) Steckzapfen (14, 15, 16) sind, die vorzugsweise eine zylindrische Form besitzen.

6. Scheibenwischeranlage nach einem der vorhergehenden Ansprüche, **dadurch gekennzeichnet, daß** die Befestigungsglieder (14, 15, 16) einstückig mit der Tragkonstruktion (3) bzw. mit einem zu der Tragkonstruktion (3) gehörenden Teil gefertigt sind.

7. Scheibenwischeranlage nach einem der vorhergehenden Ansprüche 2 bis 6, **dadurch gekennzeichnet, daß** die erste Anzahl Befestigungsglieder (14, 15) an der einen Außenseite und die zweite Anzahl Befestigungsglieder (16) an der gegenüberliegenden Außenseite der Tragkonstruktion (3) vorgesehen ist, wobei die erste Anzahl Befestigungsglieder (14, 15) an der einen Länsseite und die zweite Anzahl Befestigungsglieder (16) an der gegenüberliegenden Längsseite der Tragkonstruktion (3) vorgesehen ist, wenn die Tragkonstruktion (3) der Scheibenwischeranlage eine längliche Form aufweist.

8. Scheibenwischeranlage nach einem der vorhergehenden Ansprüche 2 bis 7, **dadurch gekennzeichnet, daß** die erste Anzahl an der Tragkonstruktion (3) vorgesehener Befestigungsglieder (14, 15) auf einer geraden oder annähernd geraden Verbindungslinie liegt, während die zweite Anzahl Befestigungsglieder (16) von dieser Verbindungslinie beabstandet ist.

9. Scheibenwischeranlage nach einem der vorhergehenden Ansprüche, wobei die Scheibenwischeranlage ein separat gefertigtes Lager (9, 10) für eine Wischerwelle (11) oder mehrere separat gefertigte Lager (9, 10) für jeweils eine Wischerwelle (11) aufweist, das bzw. die zu der Tragkonstruktion (3) gehört bzw. gehören, **dadurch gekennzeichnet, daß** an wenigstens einem dieser Lager (9, 10) ein Befestigungsglied (14, 15, 16) vorgesehen ist.

10. Scheibenwischeranlage nach einem der vorhergehenden Ansprüche, **dadurch gekennzeichnet, daß** wenigstens ein Befestigungsglied (16) an dem Antriebsaggregat (7) vorgesehen und dabei vorzugsweise einstückig mit einem Gehäuseteil oder einem Gehäusedeckelteil des Antriebsaggregates (6) ausgebildet ist.

11. Scheibenwischeranlage nach einem der vorhergehenden Ansprüche 2 bis 10, **dadurch gekennzeichnet, daß** an der Tragkonstruktion (3) drei Befestigungsglieder (14, 15, 16) vorgesehen sind, die im wesentlichen auf den Eckpunkten eines Dreicks liegen, wovon zwei Befestigungsglieder (14, 15) in die erste gleiche Richtung (17) oder in die zweite gleiche Richtung (19) von der Tragkonstruktion (3) abragen und das eine übrige Befestigungsglied (16) dementsprechend in die zweite Richtung (19) oder in die erste Richtung (17) von der Tragkonstruktion (3) abragt.

12. Scheibenwischeranlage nach Anspruch 11, **dadurch gekennzeichnet, daß** das eine übrige Befestigungsglied (16) in einem mittleren Bereich zwischen den anderen zwei Befestigungsgliedern (14, 15) und dabei vorzugsweise an dem Antriebsaggregat (7) vorgesehen ist.

13. Scheibenwischeranlage nach einem der vorhergehenden Ansprüche 11 bis 12, wobei zu der Tragkonstruktion (3) der Scheibenwischeranlage zwei separat gefertigten Lager (9, 10) für Wischerwellen (11) und zumindest ein Gehäuseteil oder ein Gehäusedeckelteil des Antriebsaggregates (7) gehören, **dadurch gekennzeichnet, daß** an jedem der zwei Lager (9, 10) jeweils ein Befestigungsglied (14, 15) vorgesehen ist, wobei diese beiden Befestigungsglieder (14, 15) quer zur Achsrichtung der Lager (9, 10) in die erste gleiche Richtung (17) von dem jeweiligen Lager (9, 10) abragen, und daß das dritte Befestigungsglied (16) an dem wenigstens einen Gehäuseteil oder Gehäusedeckelteil des Antriebsaggregats (7) vorgesehen ist und von diesem in die zweite Richtung (19) abragt.

14. Scheibenwischeranlage nach einem der vorhergehenden Ansprüche 2 bis 13, **dadurch gekennzeichnet, daß** wenigstens ein Befestigungsglied (16) der zweiten Anzahl Befestigungsglieder an seinem freien Ende eine Verdickung (20) aufweist.

15. Scheibenwischeranlage nach einem der vorhergehenden Ansprüche, **dadurch gekennzeichnet, daß** an der Tragkonstruktion (3) oder an wenigstens einem der Befestigungsglieder (14, 15, 16) ein den Einschubweg des Befestigungsgliedes (14, 15, 16) in die Aufnahmeöffnung (21, 22, 23) begrenzender Anschlag vorgesehen ist.

16. Scheibenwischeranlage nach einem der vorhergehenden Ansprüche, **dadurch gekennzeichnet, daß** die Form und die Größe einer am Fahrzeugkörper (3) vorgesehenen Aufnahmeöffnung (21) der Form und Größe des ihr zugeordneten Befestigungsgliedes (14) angepaßt ist, vorzugsweise als Rundloch ausgebildet ist, während die eine weitere Aufnahmeöffnung (22) bzw. die mehreren weiteren Aufnahmeöffnungen am Fahrzeugkörper (3) als Langloch ausgebildet ist bzw. als Langlöcher ausgebildet sind, das bzw. die in Richtung auf die benachbarte Aufnahmeöffnung (21) seine bzw. ihre größere Weite aufweist bzw. aufweisen.

17. Scheibenwischeranlage nach einem der vorhergehenden Ansprüche, **dadurch gekennzeichnet, daß** die Aufnahmeöffnungen (21, 22, 23) jeweils in einer karosseriefesten Tülle (29) aus Gummi oder anderem geigneten schwingungsdämpfenden Material vorgesehen sind.

## Claims

1. Screen wiper system for vehicles in particular motor vehicles with a supporting structure (3) comprising at least one bearing (9, 10) for a drivable wiper shaft (11), and with a screen wiper drive device (4) which comprises a drive device (7) attached to the supporting structure (3) or included in the supporting structure (3), and which furthermore comprises the at least one wiper shaft (11) and a gear connecting the drive device (7) and the at least one wiper shaft (11), where the supporting structure (3) for secure fixing to the vehicle body '(2) has at least three spaced fixing points ( ) of which two lie on a connecting line and a third at a distance from the connecting line, which are designed to co-operate with a corresponding number of fixing points on the vehicle body (2), **characterized in that** at all fixing points of the supporting structure (3) fixing elements (14, 15, 16) are provided protruding from the supporting structure (3) and designed to fix the screen wiper system to the vehicle body (2) merely by insertion in correspondingly formed holder openings (21, 22, 23) at the respective fixing points on the vehicle body (2), so that as a result a non-screw fixing of the screen wiper system to the vehicle body (2) can be achieved.

2. Screen wiper system according to claim 1, **characterized in that** a first number of fixing elements (14, 15) provided on the supporting structure (3) protrude in a first same direction (17) from the supporting structure (3) while the remaining second number of fixing elements (16) are provided on the supporting structure (3) at a distance from the connecting line of the fixing elements (15, 16) belonging to the first number and protrude from the supporting structure (3) in a second same direction (19) which runs at an angle of between 45° and 135° to the first direction (17), preferably an angle of around 90 °.

3. Screen wiper system according to claim 2, **characterized in that** the first number of fixing elements (14, 15) provided on the supporting structure (3) protrude from the supporting structure (3) essentially transverse in relation to the centre longitudinal axis of the at least one bearing (9, 10) for a wiper shaft (11), and that these fixing elements (14, 15) extend in a plane essentially parallel to the vehicle screen (1).

4. Screen wiper system according to any of the previous claims 2 to 3, **characterized in that** the second number of fixing elements (16) lies in a plane running essentially at right angles to the vehicle screen (1) and away from the screen (1) to be wiped.

5. Screen wiper system according to any of the previous claims, **characterized in that** the fixing elements (14, 15, 16) provided on the supporting structure (3) are pegs (14, 15, 16) which preferably have a cylindrical shape.

6. Screen wiper system according to any of the previous claims, **characterized in that** the fixing elements (14, 15, 16) are made as one piece with the supporting structure (3) or a part belonging to the supporting structure (3).

7. Screen wiper system according to any of the previous claims 2 to 6, **characterized in that** the first number of fixing elements (14, 15) are provided on the one outside and the second number of fixing elements (16) on the opposite outside of the supporting structure (3), where the first number of fixing elements (14, 15) are provided on the one long side and the second number of fixing elements (16) on the opposite long side of the supporting structure (3) if the supporting structure (3) of the screen wiper system has a longitudinal form.

8. Screen wiper system according to any of the previous claims 2 to 7, **characterized in that** the first number of fixing elements (14, 15) provided on the supporting structure (3) lies on a straight or approximately straight connecting line, whereas the second number of fixing elements (16) is spaced from this connecting line.

9. Screen wiper system according to any of the previous claims, where the screen wiper system has, belonging to the supporting structure (3), a separately produced bearing (9, 10) for a wiper shaft (11), or several separately produced bearings (9, 10) each for one wiper shaft (11), **characterized in that** a fixing element (14, 15, 16) is provided on at least one of these bearings (9, 10).

10. Screen wiper system according to any of the previous claims, **characterized in that** at least one fixing element (16) is provided on the drive device (7) and preferably formed as one piece with a housing part or housing cover part of the drive device (6).

11. Screen wiper system according to any of the previous claims 2 to 10, **characterized in that** on the supporting structure (3) are provided three fixing elements (14, 15, 16) which lie essentially at the corners of a triangle, of which two fixing elements (14, 15) protrude from the supporting structure (3) in the first same direction (17) or in the second same direction (19) and the other fixing element (16) protrudes from the supporting structure (3) in the second direction (19) or in the first direction (17) accordingly.

12. Screen wiper system according to claim 11, **characterized in that** a remaining fixing element (16) is provided in a centre area between the other two fixing elements (14, 15) and preferably on the drive device (7).

13. Screen wiper system according to any of the previous claims 11 to 12, where the supporting structure (3) of the screen wiper system comprises two separately produced bearings (9, 10) for wiper shafts (11) and at least one housing part or housing cover part of the drive device (7), **characterized in that** on each of the two bearings (9, 10) is provided a fixing element (14, 15) where these two fixing elements (14, 15) protrude from the bearing (9, 10) concerned transverse to the axial direction of the bearings (9, 10) in the first same direction (17), and that the third fixing element (16) is provided on the at least one housing part or housing cover part of the drive device (7) and protrudes from this in the second direction (19).

14. Screen wiper system according to any of the previous claims 2 to 13, **characterized in that** at least one fixing element (16) of the second number of fixing elements has a thickening (20) at its free end.

15. Screen wiper system according to any of the previous claims, **characterized in that** on the supporting structure (3) or on at least one of the fixing elements (14, 15, 16) is provided a stop limiting the insertion depth of the fixing element (14, 15, 16) in the holder opening (21, 22, 23).

16. Screen wiper system according to any of the previous claims, **characterized in that** the form and size of a holder opening (21) provided on the vehicle body (3) are adapted to the form and size of the fixing element (14) allocated thereto, preferably formed as a round hole, while the one further holder opening (22) or several further holder openings on the vehicle body (3) is/are formed as a slot/slots which has/have its/their greatest width in the direction towards the adjacent holder opening (21).

17. Screen wiper system according to any of the previous claims, **characterized in that** the holder openings (21, 22, 23) each are provided in a grommet (29) fixed in the body and made of rubber or other suitable vibration-damping material.

## Revendications

1. Système d'essuie-glace pour véhicules, en particulier pour véhicules utilitaires, comprenant une ossature (3), dont fait partie au moins un palier (9, 10) pour un axe d'essuie-glace (11) manoeuvrable, et comprenant un dispositif de commande (4) dont fait partie un moteur (7) qui est fixé à l'ossature (3) ou intégré à l'ossature (3), et dont font en outre partie le au moins un axe d'essuie-glace (11) et un mécanisme d'assemblage du moteur (7) et du au moins un axe d'essuie-glace, l'ossature (3) présentant pour une fixation sûre sur le corps de véhicule (2) au moins trois points de fixation ( ) espacés les uns des autres, dont deux se trouvent sur une ligne de jonction et le troisième à distance de la ligne de jonction, et qui sont conçus pour une interaction avec un nombre correspondant de points de fixation sur le corps du véhicule (2), **caractérisé en ce qu'**en tous les points de fixation sont prévus des éléments de fixation (14, 15, 16) partant de l'ossature (3), qui sont conçus pour la fixation du système d'essuie-glace sur le corps de véhicule (2) par simple emboîtement dans des orifices de positionnement (21, 22, 23) conçus de façon correspondante aux points de fixation concernés du corps de véhicule (2), de sorte qu'il est en conséquence possible de réaliser une fixation sans vissage du système d'essuie-glace sur le corps de véhicule (2).

2. Système d'essuie-glace selon la revendication 1, **caractérisé en ce qu'**un premier nombre d'éléments de fixation (14, 15) prévus sur l'ossature (3) part de l'ossature (3) dans une première même direction (17), tandis que le second nombre d'éléments de fixation (16) est prévu à distance de la ligne de jonction à l'ossature (3) des éléments de fixation (14, 15) faisant partie du premier nombre, et part de l'ossature (3) dans une seconde même direction (19), qui passe à un angle de 45° à 135° par rapport à la première direction (17), de préférence à un angle d'environ 90°.

3. Système d'essuie-glace selon la revendication 2, **caractérisé en ce que** le premier nombre d'éléments de fixation (14, 15) prévus sur l'ossature (3) part de l'ossature (3) essentiellement transversalement par rapport à l'axe longitudinal central du au moins un palier (9, 10), et **en ce que** ces éléments de fixation (14, 15) s'étendent essentiellement dans un plan parallèle au pare-brise (1).

4. Système d'essuie-glace selon une des revendications précédentes 2 à 3, **caractérisé en ce que** le second nombre d'éléments de fixation (16) se trouve dans un plan passant essentiellement à la perpendiculaire du pare-brise (1) et s'étend par rapport au pare-brise à essuyer (1) en s'éloignant de ce dernier.

5. Système d'essuie-glace selon une des revendications précédentes, **caractérisé en ce que** les éléments de fixation (14, 15, 16) prévus sur l'ossature (3) sont des tenons (14, 15, 16), qui présentent de préférence une forme cylindrique.

6. Système d'essuie-glace selon une des revendications précédentes, **caractérisé en ce que** les éléments de fixation (14, 15, 16) sont fabriqués d'une pièce avec l'ossature (3) et/ou avec une pièce faisant partie de l'ossature (3).

7. Système d'essuie-glace selon une des revendications précédentes 2 à 6, **caractérisé en ce que** le premier nombre d'éléments de fixation (14, 15) est prévu sur un côté extérieur de l'ossature (3) et le second nombre d'éléments de fixation (16) sur le côté extérieur opposé, le premier nombre d'éléments de fixation (14, 15) étant prévu sur un côté long de l'ossature (3) et l'autre sur le côté long opposé, si l'ossature (3) du système d'essuie-glace présente une forme longitudinale.

8. Système d'essuie-glace selon une des revendications 2 à 7, **caractérisé en ce que** le premier nombre d'éléments de fixation (14, 15) prévus sur l'ossature (3) se trouve sur une ligne de jonction droite ou presque droite, tandis que le second nombre d'éléments de fixation (16) est à distance de cette ligne de jonction.

9. Système d'essuie-glace selon une des revendications précédentes, sur lequel le système d'essuie-glace présente un palier (9, 10) fabriqué séparément pour l'axe d'essuie-glace (11) ou plusieurs paliers (9, 10) fabriqués séparément chacun pour un axe d'essuie-glace (11), qui fait et/ou font partie de l'ossature, **caractérisé en ce qu'**un élément de fixation (14, 15, 16) est prévu sur au moins un de ces paliers (9, 10).

10. Système d'essuie-glace selon une des revendications précédentes, **caractérisé en ce qu'**au moins un élément de fixation (16) est prévu au niveau du moteur (7) et est de préférence conçu d'une pièce avec une pièce du carter ou une pièce du couvercle de carter du moteur (7).

11. Système d'essuie-glace selon une des revendications précédentes 2 à 10, **caractérisé en ce que** sur l'ossature (3) sont prévus trois éléments de fixation (14, 15, 16) qui se trouvent essentiellement aux angles d'un triangle, dont deux éléments de fixation (14, 15) partent de l'ossature (3) dans la première même direction (17) ou dans la seconde même direction (19), et dont l'élément de fixation restant (16) part en conséquence de l'ossature (3) dans la seconde direction (19) ou dans la première direction (17).

12. Système d'essuie-glace selon la revendication 11, **caractérisé en ce que** l'élément de fixation restant (16) est prévu dans une zone centrale entre les deux autres éléments de fixation (14, 15) et de préférence au niveau du moteur (7).

13. Système d'essuie-glace selon une des revendications 11 à 12, sur lequel deux paliers (9, 10) fabriqués séparément pour les axes d'essuie-glace (11) et au moins une pièce du carter ou une pièce du couvercle de carter du moteur (7) font partie de l'ossature (3) du système d'essuie-glace, **caractérisé en ce qu'**un élément de fixation (14, 15) est prévu au niveau de chaque palier (9, 10), ces éléments de fixation (14, 15) partant de chaque palier (9, 10) transversalement à la direction de l'axe des paliers. (9, 10) dans la première direction (17), et **en ce que** le troisième élément de fixation (16) est prévu sur la au moins une pièce du carter ou pièce du couvercle de carter du moteur (7) et part de ce dernier dans la seconde direction (19).

14. Système d'essuie-glace selon une des revendications précédentes 2 à 13, **caractérisé en ce qu'**au moins un élément de fixation (16) du second nombre d'éléments de fixation présente un épaississement (20) à son extrémité libre.

15. Système d'essuie-glace selon une des revendications précédentes, **caractérisé en ce qu'**une butée délimitant la course des éléments de fixation (14, 15, 16) dans les orifices de positionnement (21, 22, 23) est prévue au niveau de l'ossature (3) ou au niveau d'au moins un des éléments de fixation (14, 15, 16).

16. Système d'essuie-glace selon une des revendications précédentes, **caractérisé en ce qu'**un orifice de positionnement prévu sur le corps de véhicule (2) a une forme et une taille adaptées à la forme et à la taille de l'élément de fixation (14) qui lui est associé, et est de préférence conçu sous la forme d'un trou rond, tandis que l'autre/les plusieurs autres orifice(s) de positionnement (22) sur le corps de véhicule (2) est/sont conçus(s) sous la forme d'un/de trou(s) oblong(s), qui présente/présentent sa/leur plus grande largeur en direction de l'orifice de positionnement voisin;

17. Système d'essuie-glace selon une des revendications précédentes, **caractérisé en ce que** les orifices de positionnement (21, 22, 23) sont chacun prévus dans une douille (29) en caoutchouc ou autre matériau adapté pour amortir les vibrations fixée à la carrosserie.
